(19) Europäisches Patentamt
European Patent Office
Office européen des brevets

(11) **EP 4 322 103 B1**

(12) **EUROPEAN PATENT SPECIFICATION**

(45) Date of publication and mention
of the grant of the patent:
**22.04.2026  Bulletin 2026/17**

(51) International Patent Classification (IPC):
**G06T 5/50** (2006.01)     **G06T 5/60** (2024.01)

(21) Application number: **23189386.8**

(52) Cooperative Patent Classification (CPC):
**G06T 5/50; G06T 5/60;** G06T 2207/10016;
G06T 2207/20081; G06T 2207/20084;
G06T 2207/20221

(22) Date of filing: **03.08.2023**

(54) **METHOD AND SYSTEM WITH DYNAMIC IMAGE SELECTION**

VERFAHREN UND SYSTEM MIT DYNAMISCHER BILDAUSWAHL

PROCÉDÉ ET SYSTÈME DE SÉLECTION D'IMAGE DYNAMIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **11.08.2022  KR 20220100812**

(43) Date of publication of application:
**14.02.2024  Bulletin 2024/07**

(73) Proprietor: **Samsung Electronics Co., Ltd.**
**Suwon-si, Gyeonggi-do 16677 (KR)**

(72) Inventors:
• **SEO, Geonseok**
**16678 Suwon-si (KR)**
• **KI, Sehwan**
**16678 Suwon-si (KR)**
• **CHOI, Jae Seok**
**16678 Suwon-si (KR)**
• **KIM, Insoo**
**16678 Suwon-si (KR)**
• **LEE, Hyong Euk**
**16678 Suwon-si (KR)**

(74) Representative: **Arnold & Siedsma**
**Bezuidenhoutseweg 57**
**2594 AC The Hague (NL)**

(56) References cited:
**EP-A1- 4 040 378      US-A1- 2021 044 761**

• **REN JIAN ET AL: "Best Frame Selection in a
Short Video", 1 March 2020 (2020-03-01), pages
3212 - 3221, XP093112392, ISBN:
978-1-7281-6553-0, Retrieved from the Internet
<URL:https://openaccess.thecvf.com/
content_WACV_2020/papers/Ren_Best_Frame_
Selection_in_a_Short_Video_WACV_2020_pape
r.pdf> DOI: 10.1109/WACV45572.2020.9093615**

**Description**

BACKGROUND

1. Field

The following embodiments relate to an image restoration method and an image restoration apparatus with dynamic image selection.

2. Description of Related Art

Images acquired by a smartphone camera in a low-light environment may include strong noise inserted therein due to a low signal-to-noise ratio (SNR) and thus may have significantly poor image quality compared to images acquired in a normal-light environment. To solve this, a method of enhancing an image by capturing multiple burst images may be used. A deep learning-based image restoration methods may be used to generate a single image with enhanced image quality by fusing multiple burst images.

EP 4040378 A1 discloses an image restoration method. The method includes determining an anchor image based on individual images of a burst image set, executing a feature extraction network based on the burst image set while using anchor information of the anchor image, and generating a restored image based on a feature map corresponding to an output of the feature extraction network.

Jian Ren et al. ("Best Frame Selection in a Short Video", March 2020, doi: 10.1109/WACV45572.2020.9093615) discloses the problem of the best frame selection in a short video and how to solve it automatically.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one or more general aspects, a processor-implemented method is provided according to claim 1. The method includes: obtaining a plurality of image frames acquired for a scene within a predetermined time; determining loss values respectively corresponding to the plurality of image frames; determining a reference frame among the plurality of image frames based on the loss values; and generating a final image of the scene based on the reference frame.

The determining of the reference frame may include determining an image frame having a minimum of the loss values among the plurality of image frames to be the reference frame.

The determining of the loss values includes determining an intermediate feature map and an output feature map corresponding to an image frame among the plurality of image frames by inputting the image frame and an output feature map corresponding to a previous image frame among the plurality of image frames into a first neural network.

The determining of the loss values includes determining a loss value corresponding to the image frame by inputting the intermediate feature map into a second neural network.

The determining of the reference frame may include comparing the loss value corresponding to the image frame with a reference loss value determined prior to the determining of the loss value corresponding to the image frame.

The determining of the reference frame may include replacing the reference loss value with the loss value corresponding to the image frame, in response to the loss value corresponding to the image frame being less than the reference loss value.

The method may include replacing a reference input feature map corresponding to the reference loss value with the output feature map corresponding to the previous image frame, in response to the loss value corresponding to the image frame being less than the reference loss value.

The determining of the reference frame may include maintaining the reference loss value, in response to the loss value corresponding to the image frame being greater than the reference loss value.

The generating of the final image includes generating the final image by inputting the reference frame and the reference input feature map into the first neural network.

The determining of the loss value may include: generating an output feature map by inputting an image frame among the plurality of image frames and an output feature map corresponding to a previous image frame among the plurality of image frames into a first neural network; and determining a loss value corresponding to the image frame by inputting the image frame into a second neural network.

The determining of the reference frame may include either one or both of: determining, as a plurality of reference frames, a predetermined number of the plurality of image frames having minimum loss values among the loss values; and determining, as the plurality of reference frames, image frames of the plurality of image frames having loss values less than or equal to a threshold among the loss values.

In one or more general aspects, a non-transitory computer-readable storage medium stores instructions that, when executed by a processor, configure the processor to perform any one, any combination, or all of operations and/or methods described herein.

In one or more general aspects, an apparatus includes: one or more processors configured to: obtain a plurality of image frames acquired for a scene within a predetermined time; determine loss values respectively corresponding to the plurality of image frames; determine a reference frame among the plurality of image frames based on the loss values; and generate a final image of the scene based on the reference frame.

For the determining of the reference frame, the one or more processors may be configured to determine an image frame having a minimum of the loss values among the plurality of image frames to be the reference frame.

In one or more general aspects, a processor-implemented method includes: inputting an image frame into an image restoration neural network comprising a plurality of layers and comprising a recursive structure; inputting an intermediate feature map output from an intermediate layer of the image restoration neural network into a loss prediction neural network; and determining, from the loss prediction neural network, a loss value indicating a difference between an image restored by the image restoration neural network and a ground truth image.

The method may include obtaining a plurality of image frames, wherein loss values respectively corresponding to the image frames are determined using the loss prediction neural network.

An image frame among the plurality of image frames having a minimum value among the loss values may be determined to be a reference frame, and an image output from the image restoration neural network, by inputting the reference frame into the image restoration neural network again, may be determined to be a restored final image.

The image restoration neural network may be configured to output the restored final image using an output feature map corresponding to an image frame preceding the reference frame.

The output feature map may be a feature map output from an intermediate layer of the image restoration neural network receiving the image frame preceding the reference frame.

The intermediate layer of the image restoration neural network that outputs the output feature map may be a layer subsequent to the intermediate layer that outputs the intermediate feature map input into the loss prediction neural network.

The image restoration neural network and the loss prediction neural network may be one neural network.

Other features and aspects will be apparent from the following detailed description, the drawings, and the claims.

BRIEF DESCRIPTION OF THE DRAWINGS

FIGS. 1A and 1B illustrate examples of deep learning-based image restoration methods using multiple burst images.

FIG. 2A illustrates an example of a deep learning operation method using an artificial neural network (ANN).

FIG. 2B illustrates an example of an image restoration system.

FIG. 3 illustrates an example of a final image generation method.

FIG. 4A illustrates an example of determining a reference frame, FIG. 4B illustrates an example of generating a final image of a scene based on a reference frame, and FIG. 4C illustrates an example of an image restoration method.

FIGS. 5A and 5B illustrate examples of training a loss prediction network.

FIG. 6 illustrates an example of an effect of an image restoration system.

FIG. 7 illustrates an example of driving an image restoration network and a loss prediction network in parallel using a plurality of processors.

FIGS. 8A and 8B illustrate examples of inputs of a loss prediction network.

FIG. 9 illustrates examples of early stopping.

FIG. 10 illustrates an example of a configuration of an image restoration apparatus.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Throughout the specification, when a component or element is described as being "on", "connected to," "coupled to," or "joined to" another component, element, or layer it may be directly (e.g., in contact with the other component or element) "on", "connected to," "coupled to," or "joined to" the other component, element, or layer or there may reasonably be one or more other components, elements, layers intervening therebetween. When a component or element is described as being "directly on", "directly connected to," "directly coupled to," or "directly joined" to another component or element, there can be no other elements intervening therebetween. Likewise, expressions, for example, "between" and "immediately between" and "adjacent to" and "immediately adjacent to" may also be construed as described in the foregoing.

The terminology used herein is for the purpose of describing particular examples only and is not to be limiting of the examples. The singular forms "a", "an", and "the" are intended to include the plural forms as well, unless the context clearly indicates otherwise. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

As used herein, the term "and/or" includes any one and any combination of any two or more of the associated listed items. The phrases "at least one of A, B, and C", "at least one of A, B, or C", and the like are intended to have disjunctive meanings, and these phrases "at least one of A, B, and C", "at least one of A, B, or C", and the like also include examples where there may be one or more of each of A, B, and/or C (e.g., any combination of one or more of each of A, B, and C), unless the corresponding description and embodiment necessitates such listings (e.g., "at least one of A, B, and C") to be interpreted to have a conjunctive meaning.

Unless otherwise defined, all terms used herein including technical or scientific terms have the same meaning as commonly understood by one of ordinary skill in the art to which this disclosure pertains and based on an understanding of the disclosure of the present application. It will be further understood that terms, such as those defined in commonly-used dictionaries, should be interpreted as having a meaning that is consistent with their meaning in the context of the relevant art and the disclosure of the present application, and will not be interpreted in an idealized or overly formal sense unless expressly so defined herein.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application. The use of the term "may" herein with respect to an example or embodiment, e.g., as to what an example or embodiment may include or implement, means that at least one example or embodiment exists where such a feature is included or implemented, while all examples are not limited thereto.

The embodiments may be implemented as various types of products, such as, for example, a personal computer (PC), a laptop computer, a tablet computer, a smartphone, a television (TV), a smart home appliance, an intelligent vehicle, a kiosk, and/or a wearable device. Hereinafter, embodiments will be described in detail with reference to the accompanying drawings. In the drawings, like reference numerals are used for like elements.

Many mobile devices such as smartphones and tablet computers include cameras that may be used to capture still images and video images.

Images acquired by a mobile device in a low-light environment may include strong noise inserted therein due to a low signal-to-noise ratio (SNR) and thus may have significantly poor image quality compared to images acquired in a normal-light environment. To solve this, a method of enhancing an image by capturing the image with a long exposure time or capturing multiple burst images may be used.

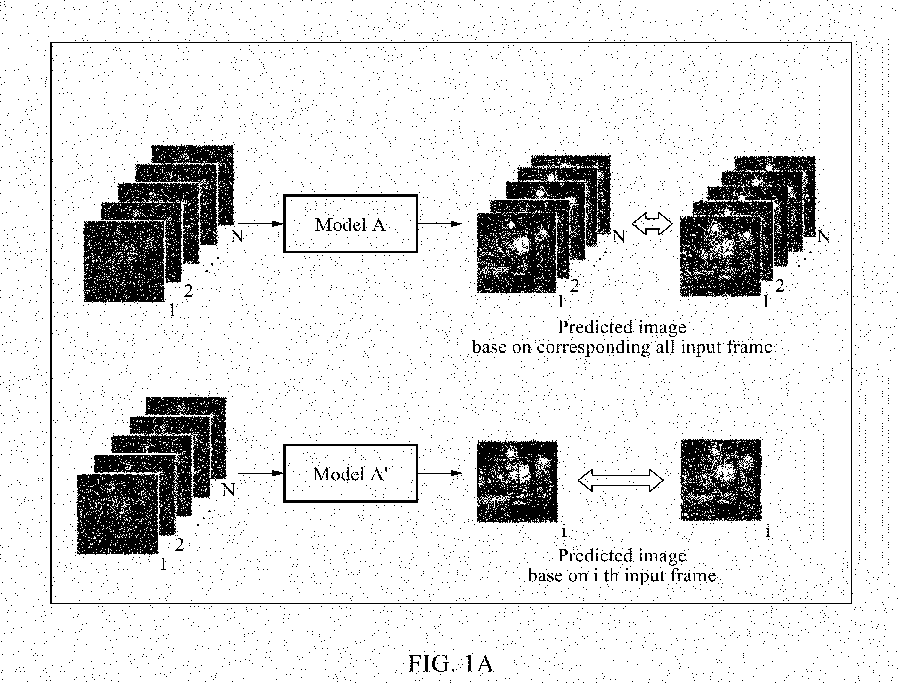

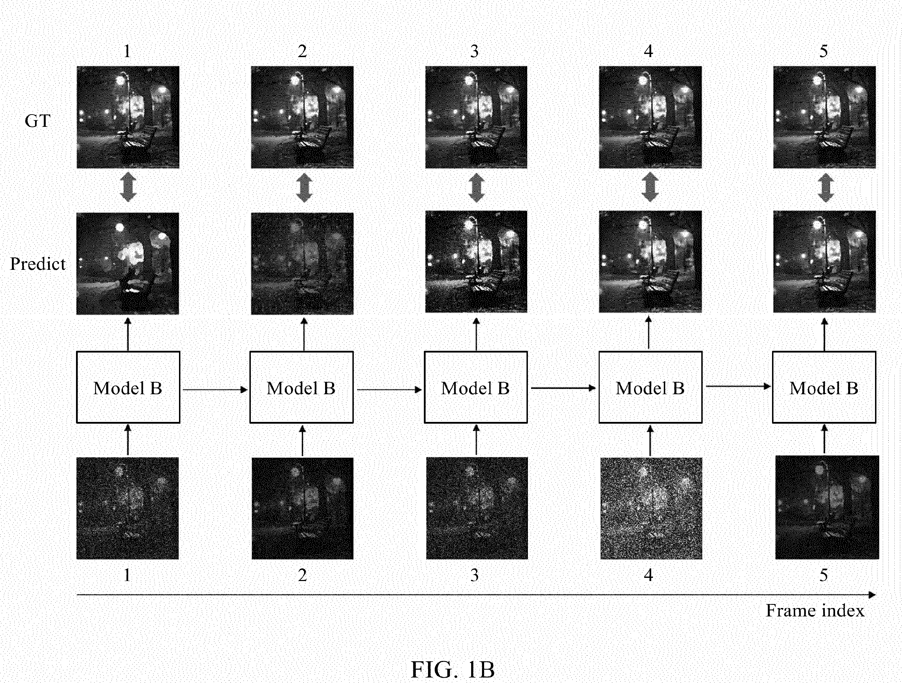

FIGS. 1A and 1B illustrate examples of deep learning-based image restoration methods using multiple burst images.

Deep learning-based image restoration methods using multiple burst images may be divided into non-recursive networks and recursive networks according to the type of input.

Referring to FIG. 1A, a non-recursive network may generate one or N enhanced images by concatenating multiple burst images channel-wise and inputting the concatenated images into a model. The non-recursive network may not sequentially process the burst images according to time order.

The non-recursive may fetch all the captured burst images to memory for model inference, which may incur a heavy processing burden. The burden may be more severe as the image quality increases. In addition, since multiple images are concatenated and input into the network in the process of performing inference, the non-recursive network may incur a greater memory access cost than the recursive network based on the image size of the same input, and thus, a lot of load may be applied thereto in terms of speed and power when driven in a mobile environment.

Referring to FIG. 1B, a recursive network may sequentially process burst images one by one according to time order. The recursive network may reuse an output feature map computed from a previous frame image when processing a next frame.

The recursive network may acquire an enhanced image only with each input frame and an output of a previous network, and thus may incur less of a processing burdened than the non-recursive network during the process of fetching the input. Also, the method of the typical non-recursive network may operate only when all burst images are captured, whereas the recursive network may use each input frame immediately as its input when the input frame is captured.

Furthermore, unlike the non-recursive network that processes all the input frames after storing the input frames, the recursive network may output, for each input frame, a restored image without explicitly storing a previous input frame and thus, may have an even greater gain than the non-recursive network in terms of latency. Therefore, the recursive network may be more advantageous than the non-recursive network in a mobile environment.

As will be described in detail below, an image restoration method of one or more embodiments may operate at low power in real time using a recursive network. For example, the image restoration method may use a network with loss prediction (hereinafter, the loss prediction network). The image restoration method of one or more embodiments may use an intermediate feature map (generated during inference on each input frame image using an image restoration network) as input for the loss prediction network, thereby reducing a processing cost and improving a processing speed compared to a typical image restoration method that generates restored images to be used as inputs for a loss prediction network. The loss prediction network may be a network that indirectly predicts a difference between an image enhanced using the image restoration network and an actual ground truth image.

A frame of an image having a minimum loss value, which is an output of the loss prediction network, may be determined to be a ground truth frame, and a final image with the highest image quality may be obtained (e.g., determined) by inferring the existing image restoration network using a finally selected frame index and a feature map.

Although the techniques described below are primarily described as being performed using a mobile electronic device, it should be appreciated that other electronic devices may also be used to perform or support such techniques. Accordingly, such techniques may be used in various types of electronic devices.

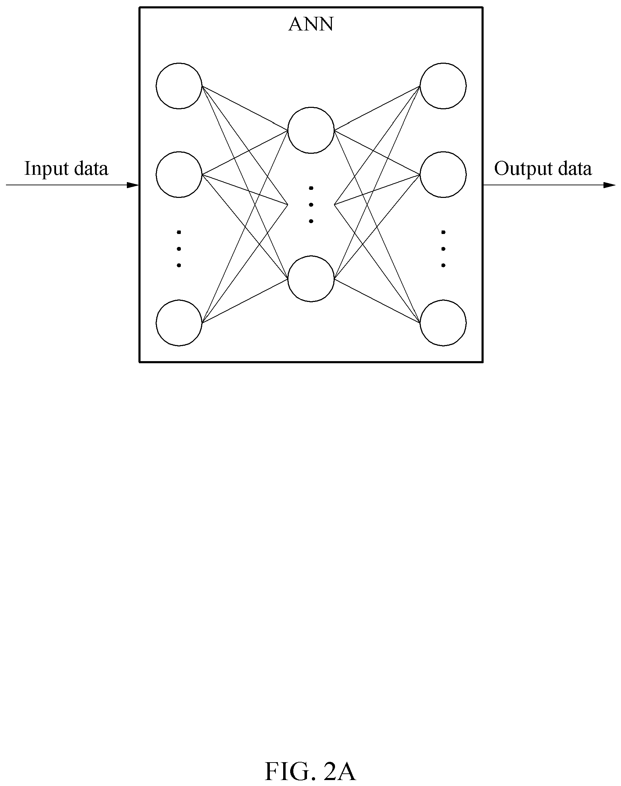

FIG. 2A illustrates an example of a deep learning operation method using an artificial neural network (ANN).

An artificial intelligence (AI) method including deep learning may input data into an artificial neural network (ANN), train the ANN with output data through operations such as convolution, and extract features using the trained ANN. The ANN may be a computational architecture. In the ANN, nodes are connected to each other and collectively operate to process the input data. The ANN may be or include, for example, a feed-forward neural network, a deep neural network (DNN), a convolutional neural network (CNN), a recurrent neural network (RNN), a deep belief network (DBN), and/or a restricted Boltzmann machine (RBM), but is not limited thereto. In the feed-forward neural network, nodes may have links to other nodes and the links may be expanded in one direction (for example, a forward direction) through the neural network.

The ANN may be a CNN that receives input data and outputs output data. The ANN may be a DNN including at least two layers.

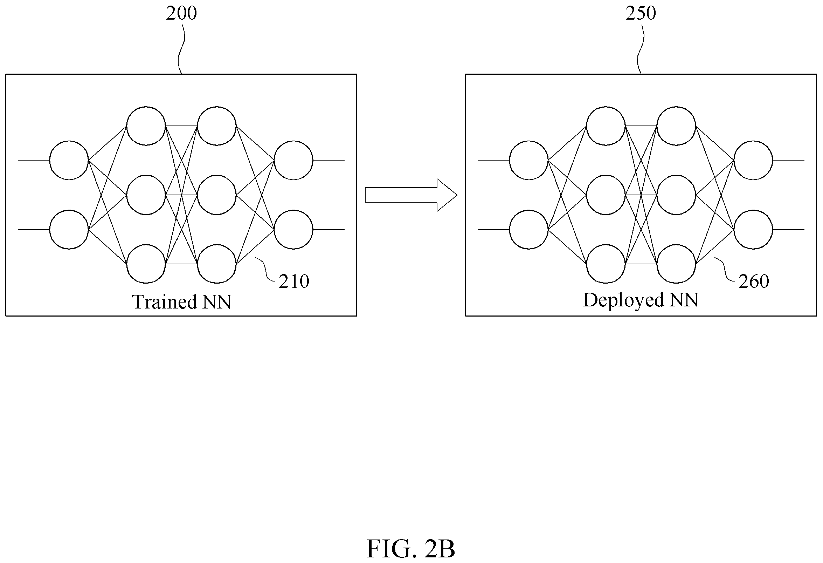

FIG. 2B illustrates an example of an image restoration system.

Referring to FIG. 2B, an image restoration system may include a training apparatus 200 and an image restoration apparatus 250. The training apparatus 200 may correspond to a computing device having various processing functions, for example, functions of generating a neural network, training (or learning) a neural network, and/or retraining a neural network. For example, the training apparatus 200 may be implemented as various types of devices such as a personal computer (PC), a server device, a mobile device, and/or the like.

The training apparatus 200 may generate at least one trained neural network 210 by repetitively training (or learning) a given initial neural network. Generating the at least one trained neural network 210 may include determining neural network parameters. These parameters may include various types of data (for example, input/output activations, weights, and/or biases) that are input to and output from the neural network. When the neural network is repeatedly trained, the parameters of the neural network may be tuned to generate a more accurate output for a given input.

The training apparatus 200 may transmit the trained at least one neural network 210 to the image restoration apparatus 250. The image restoration apparatus 250 may be, or be included in, for example, a mobile device and/or an embedded device. The image restoration apparatus 250 may be an electronic device including at least one of a processor, a memory, an input/output (I/O) interface, a display, a communication interface, and/or a sensor as dedicated hardware for driving a neural network. For example, the sensor may include one or more cameras or other imaging sensors for capturing images of scenes.

The image restoration apparatus 250 may be or include any digital device that includes a memory means and a microprocessor and has a computation capability, such as a tablet personal computer (PC), a smartphone, a PC (e.g., a notebook computer, etc.), an artificial intelligence (AI) speaker, a smart television (TV), a mobile phone, a navigation device, a web pad, a personal digital assistant (PDA), a workstation, and/or the like. Hereinafter, the image restoration apparatus 250 may also be referred to as the final image generation apparatus.

The image restoration apparatus 250 may drive the at least one trained neural network 210 as it is or may drive a neural network 260 into which the at least one trained neural network 210 is processed (e.g., quantized). The image restoration apparatus 250 for driving the processed neural network 260 may be implemented in a separate device independent of the training apparatus 200. However, examples are not limited thereto, and the image restoration apparatus 250 and the training apparatus 200 may also be implemented in the same device. For example, the image restoration apparatus 250 may include the training apparatus 200, or the training apparatus 200 may include the image restoration apparatus 250.

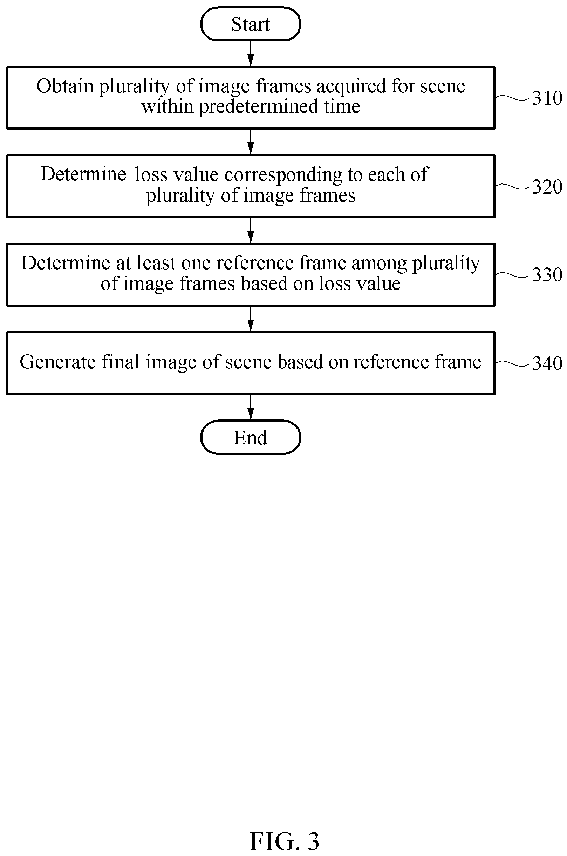

FIG. 3 illustrates an example of a final image generation method.

For ease of description, it will be described that operations 310 to 340 are performed using the image restoration apparatus 250 shown in FIG. 2B. However, operations 310 to 340 may be performed by any suitable electronic device and in any suitable system.

In operation 310, the image restoration apparatus 250 may obtain a plurality of image frames acquired for a scene within a predetermined time. Hereinafter, for ease of description, the plurality of image frames acquired for the one scene may also be referred to as burst images, input images, or input frames. The image restoration apparatus 250 may perform continuous shooting using an imaging sensor. The image restoration apparatus 250 may capture multiple image frames for a scene during a continuous shooting operation. The capturing operation may be performed in response to an event such as a user's activating a shutter control.

In some embodiments, the multiple image frames may be captured using one image sensor of the image restoration apparatus 250, such as a camera. In some other embodiments, the multiple image frames may be captured using multiple image sensors of the image restoration apparatus 250, such as multiple cameras, and each of the image sensors may capture one image or multiple images.

Alternatively, the image restoration apparatus 250 may receive a plurality of image frames captured through another device.

In operation 320, the image restoration apparatus 250 may obtain, for each of the plurality of image frames, a loss value corresponding to the image frame. The loss values may each be one scalar value corresponding to a respective image frame. The image restoration apparatus 250 may obtain the loss value corresponding to each of the plurality of image frames using a loss prediction network.

As described above, the image restoration apparatus 250 may use the loss prediction network together with an image restoration network. The image restoration network may receive the image frames and output an enhanced image of the scene. Hereinafter, the enhanced image may also be referred to as the restored image.

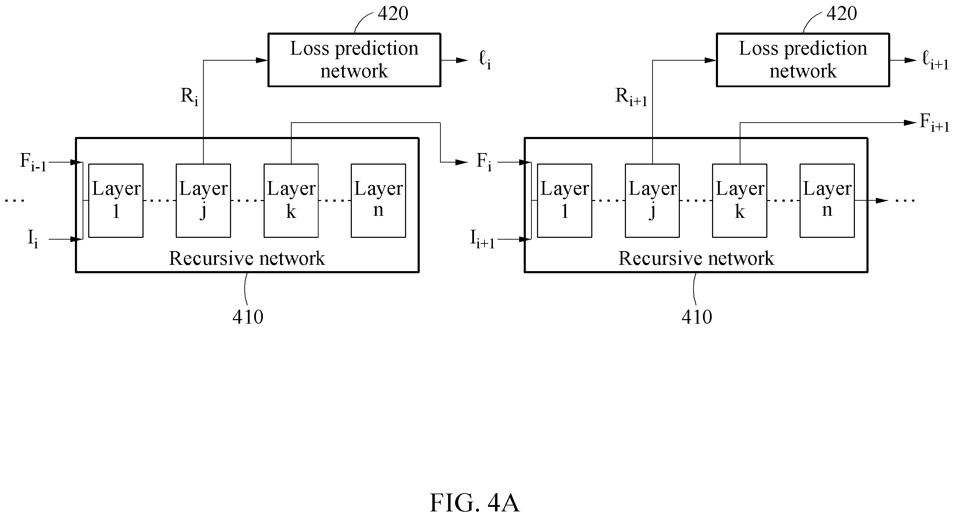

The loss value may be a difference value between an image restored through the image restoration network and a ground truth image. For example, an image frame for which a small loss value is predicted may be expected or determined to be restored as a good (e.g., accurate or high quality) image when passing through the image restoration network. An example of obtaining a loss value using a loss prediction network will be described in further detail below with reference to FIGS. 4A to 4C.

In operation 330, the image restoration apparatus 250 may determine at least one reference frame among the plurality of image frames based on the loss value. A reference frame may be a frame used to generate a final image of a scene. Depending on the example, the number of reference frames may be changed. For example, the number of reference frames may be "1" or "3". However, the number of reference frames is not limited thereto and may be adopted in various manners.

An image frame expected to be restored as the best image among the plurality of image frames acquired through continuous shooting may be determined to be the reference frame. To this end, the image restoration apparatus 250 may determine the reference frame based on the loss value. For example, the image restoration apparatus 250 may determine an image frame having a minimum loss value to be the reference frame. Alternatively, the image restoration apparatus 250 may arrange the plurality of image frames in order of a small loss value and determine the top k image frames to be reference frames (e.g., the image restoration apparatus 250 may determine k image frames having the smallest loss values to be reference frames). Alternatively or additionally, the image restoration apparatus 250 may determine image frames having loss values less than or equal to a threshold value to be reference frames.

The typical image restoration methods may need to first generate restored images respectively corresponding to a plurality of image frames and select an image with the best image quality from among the generated multiple restored images.

In contrast, the image restoration apparatus 250 of one or more embodiments may determine an image frame expected to be restored as the best image among the plurality of image frames using the loss value without generating restored images for all image frames. An operation of calculating a loss value using a loss prediction network may be simpler than an operation of generating a restored image using an image restoration network.

In operation 340, the image restoration apparatus 250 may generate a final image (e.g., a restored image) of the scene based on the reference frame. The image restoration apparatus 250 may generate the final image corresponding to the reference frame by inputting the reference frame into the image restoration network. As described above, the image restoration apparatus 250 of one or more embodiments may generate a final image for the determined reference frame without generating restored images for all image frames, thereby reducing a processing cost and improving a processing speed compared to a typical image restoration apparatus that generates restored images for all image frames. When there are a plurality of reference frames, a final image may be generated for each of the reference frames.

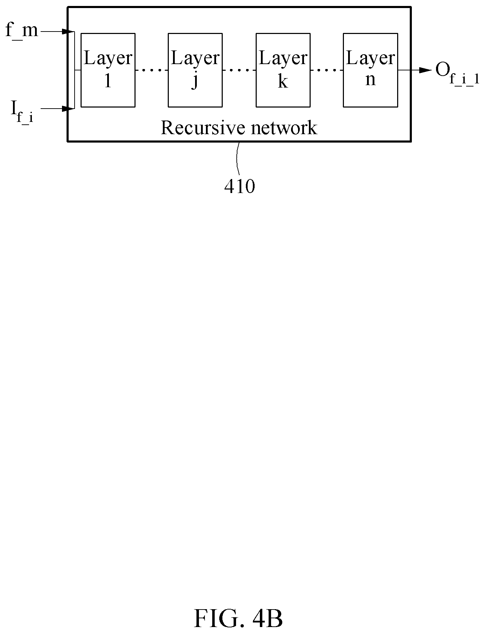

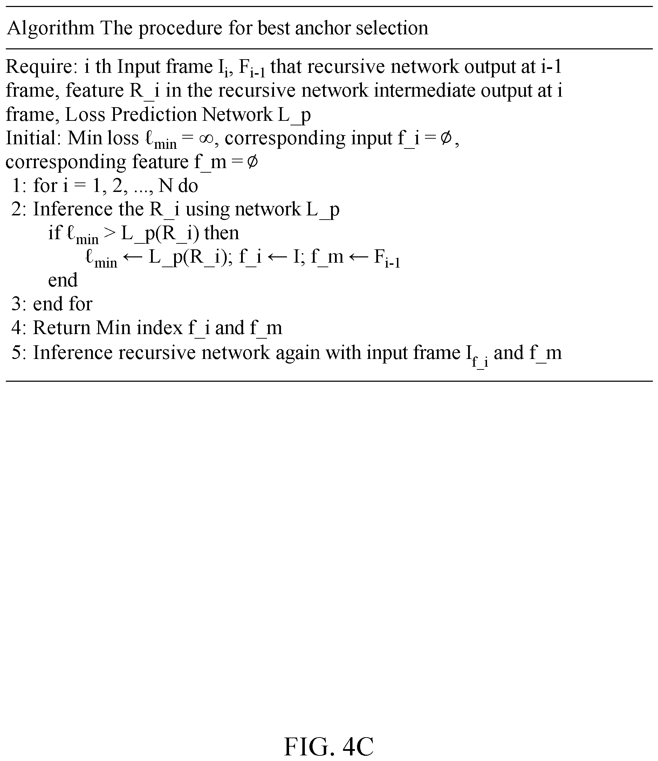

FIG. 4A illustrates an example of determining a reference frame, FIG. 4B illustrates an example of generating a final image of a scene based on a reference frame, and FIG. 4C illustrates an example of an image restoration method.

The description provided with reference to FIG. 3 may also apply to the examples of FIGS. 4A and 4C. For example, the description of the image restoration network and the loss prediction network provided with reference to FIG. 3 may also apply to an image restoration network 410 and a loss prediction network 420 of FIGS. 4A and 4C.

Referring to FIG. 4A, the image restoration apparatus 250 may include the image restoration network 410 and the loss prediction network 420.

The image restoration network 410 may receive an i-th image frame $I_i$ among a plurality of (e.g., N) image frames and an output feature map $F_{i-1}$ corresponding to an (i-1)-th image frame. Here, i may be a natural number greater than "1" and less than "N". The output feature map $F_{i-1}$ corresponding to the (i-1)-th image frame may also be referred to as an input feature map corresponding to the i-th image frame.

For ease of description, the operation of the image restoration network 410 and the operation of the loss prediction network 420 are described based on the i-th image frame $I_i$, but other image frames may operate in the same manner. Hereinafter, the image restoration network 410 may be referred to as a first neural network.

The image restoration network 410 may have a recursive network structure including a plurality of layers. For example, the image restoration network 410 may include an encoder and a decoder.

The image restoration network 410 may output one or more intermediate feature maps R_i and an output feature map $F_i$ corresponding to the i-th image frame $I_i$. The output feature map $F_i$ corresponding to the i-th image frame $I_i$ may be used as an input feature map along with an (i+1)-th image frame $I_{i+1}$ input to the image restoration network 410 in a subsequent operation.

The intermediate feature map R_i may be a feature map output from a predetermined layer among the plurality of layers of the image restoration network 410. For example, the intermediate feature map R_i may be a feature map output from a j-th layer, in the image restoration network 410 including the n layers. Here, j may be a natural number greater than "1" and less than "n". The image restoration network 410 may output a plurality of intermediate feature maps, and the plurality of intermediate feature maps may be used as input for the loss prediction network 420.

An output feature map may be information about characteristics of an image frame, and an output of which layer among the plurality of layers of the image restoration network 410 is to be determined to be an output feature map may vary depending on the configuration. For example, in the image restoration network 410 including the n layers, a feature map of an n-th layer may be used as the output feature map, or a feature map of a k-th layer may be used as the output feature map. Here, k may be a natural number greater than "1" and less than "n". In FIG. 4A, the k-th layer outputting the output feature map is shown as being positioned further ahead of the j-th layer outputting the intermediate feature map R_i. However, in some examples, a layer prior to the layer outputting the intermediate feature map R_i may output an output feature map.

The loss prediction network 420 may receive one or more intermediate feature maps R_i corresponding to the i-th image frame $I_i$, and output a loss value $l_i$ corresponding to the i-th image frame $I_i$.

The loss prediction network 420 may include any or all types of layers acting on a feature map using filters such as a fully connected layer, a convolutional layer, and/or the like.

As described above, the loss value $l_i$ may be one scalar value, and the loss prediction network 420 may use a pooling layer (e.g., an average pooling layer) or a max pooling layer in the middle of the network to generate an output as the one scalar value.

The loss prediction network 420 may use, as an input, the intermediate feature map R_i inferred using the image restoration network 410 which has more information, rather than a predetermined image frame.

As described in detail below, the loss prediction network 420 may not aim to accurately predict an expected loss. The loss prediction network 420 may learn a relative difference between an image that is relatively easy to restore and an image that is relatively difficult to restore during training. To this end, the loss prediction network 420 may use a ranking loss for learning. The loss prediction network 420 may learn with a ranking loss, thereby indirectly predicting a difference between an actual ground truth image and an image enhanced using the image restoration network 410.

The image restoration apparatus 250 may compare the loss value $l_i$ corresponding to the i-th image frame $l_i$ with one or more reference loss values determined before the i-th image frame $l_i$ (from a first image frame to the (i-1)-th image frame).

A reference loss value may be a loss value of a reference frame. As described above, an image frame for which a small loss value is predicted may be expected to be restored as a good image when passing through the image restoration network.

The image restoration apparatus 250 may determine an image frame having a minimum loss value to be the reference frame. Alternatively, the image restoration apparatus 250 may arrange the plurality of image frames in order of a small loss value and determine the top k image frames to be reference frames.

A reference loss value may be defined as $l_{min\_p}$. Here, p denotes an index of a reference frame. For example, if there are three reference frames, a reference loss value of a reference frame having a minimum loss value may be $l_{min\_1}$, a reference loss value of a reference frame having a second minimum loss value may be $l_{min\_2}$, and a reference loss value of a reference frame having a third minimum loss value may be $l_{min\_3}$. Hereinafter, for ease of description, a case of a single reference frame is described. However, the description may also apply to a case of a plurality of reference frames.

The image restoration apparatus 250 may compare the loss value $l_i$ corresponding to the i-th image frame $l_i$ with the reference loss value $l_{min}$, and determine the loss value $l_i$ to be a new reference loss value when the loss value $l_i$ is less than the reference loss value $l_{min}$.

Furthermore, when the loss value $l_i$ is less than the reference loss value $l_{min}$, the image restoration apparatus 250 may replace a reference input feature map f_m corresponding to the reference loss value $l_{min}$ with the input feature map $F_{i-1}$ corresponding to the i-th image frame.

Also, when the loss value $l_i$ is less than the reference loss value $l_{min}$, the image restoration apparatus 250 may replace a reference index f_i corresponding to the reference loss value $l_{min}$ with the index i of the i-th image frame $l_i$.

Conversely, when the loss value $l_i$ is greater than or equal to the reference loss value $l_{min}$, the image restoration apparatus 250 may not change but maintain the reference loss value $l_{min}$, and the image restoration apparatus 250 may also not change but maintain the reference input feature map f_m as well.

The image restoration apparatus 250 may compare loss values for all the plurality of image frames according to the above-described method, arrange the plurality of image frames in order of a small loss value, and determine the top k image frames to be reference frames.

Referring to FIG. 4B, the image restoration apparatus 250 may generate a final image $O_{f\_i\_1}$ of a scene based on a determined reference frame (e.g., the reference input feature map f_m). The image restoration apparatus 250 may fetch the reference frame corresponding to a reference index (e.g., the reference index f_i), infer the image restoration network 410, and generate the final image of the scene. In other words, the image restoration apparatus 250 may determine an image frame expected to be restored as the best image, among the plurality of image frames, using a loss value without generating restored images for all he image frames, and thus, may determine the best image by performing inference only once (or k times when there are k reference frames).

For example, the image restoration network 410 may receive a reference frame $I_{f\_i}$ and the reference input feature map f_m and output a final image $O_{f\_i\_1}$.

Referring to FIG. 4C, the final goal of the image restoration method is to obtain k reference frames (e.g., one or more reference frames) with the best image quality. To this end, the i-th image frame $l_i$ and the output feature map $F_{i-1}$ corresponding to the (i-1)-th image frame, which are input for the image restoration network 410, may be used.

First, the image restoration apparatus 250 may determine a first loss value $l_1$, by inputting a first intermediate feature map R_1 into the loss prediction network 420. The loss prediction network 420 may be defined as L_P, and the output of the loss prediction network 420 receiving the i-th intermediate feature map R_i may be expressed as L_P(R_i).

When the initial reference loss value $l_{min}$ is set to infinity and a first loss value $l_1$ is less than this value, the image restoration apparatus 250 may change the reference loss value to the loss value $l_1$, and the image restoration apparatus 250 may also change the reference input feature map f_m and the reference index f_i corresponding to the reference loss value.

According to the above-described method, in response to the completion of inferring the i-th loss value $l_i$

corresponding to the i-th image frame $I_i$, the image restoration apparatus 250 may compare the existing reference loss value $l_{min}$ with the i-th loss value $l_i$ and change the reference loss value when the i-th loss value $l_i$ is less than the reference loss value $l_{min}$. When changing the reference loss value, the reference input feature map f_m and the reference index f_i of the image restoration network corresponding to the reference loss value may also be changed.

Through a total of N inferences of the loss prediction network 420 as described above, the image restoration apparatus 250 may obtain the final minimum loss value $l_{min}$, a corresponding reference index f_i at this time, and a corresponding reference input feature map f_m of the image restoration network 410 at this time.

The image restoration apparatus 250 may infer the image restoration network one more time by lastly fetching the input feature map f_m of the image restoration network 410 corresponding to the minimum loss value $l_{min}$ and an input frame $I_{f\_i}$ corresponding to the reference index f_i, and output a final image $O_{f\_i}$ with the best image quality.

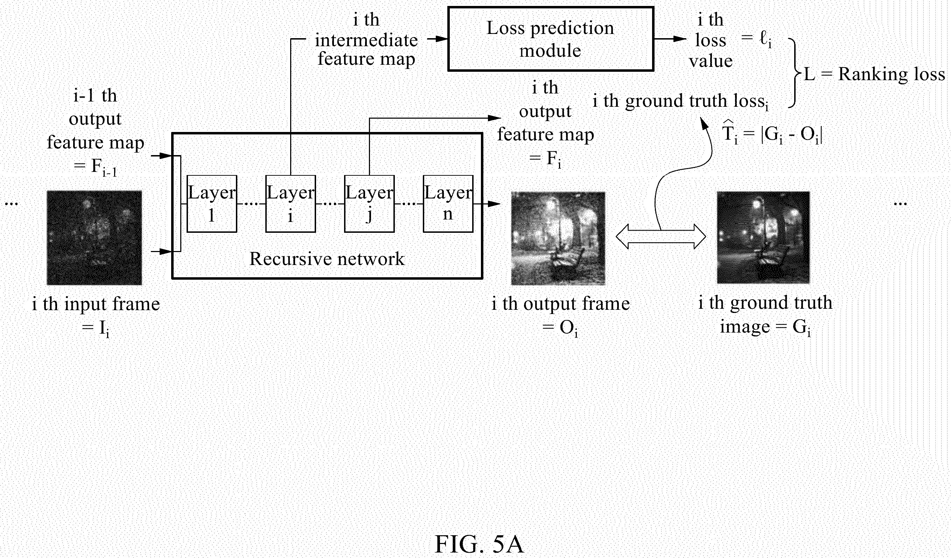

FIG. 5A illustrates an example of training a loss prediction network. The description provided with reference to FIGS. 2A to 4C may also apply to the example of FIG. 5A.

The loss prediction network 420 may use a ranking loss to indirectly predict a difference between an actual ground truth image and an image enhanced using the image restoration network 410.

The training apparatus 200 may obtain an intermediate feature map by inferring respective image frames using the trained image restoration network 410, and determine a loss function using the intermediate feature map as an input.

Since it is difficult to accurately predict a loss value in practice, the loss function may use a ranking loss to learn a difference when a loss value of a predetermined pair (p = (i, j)) is given.

When a predetermined image frame is given, a difference (e.g., L1 or L2 norm) between an image restored from the given image frame using the trained image restoration network 410 and a ground truth image may be a criterion for learning. Based on the value of the difference determined from the two different input images, the loss prediction network 420 may predict a loss difference between input feature maps.

For example, when training the loss prediction network 420, the loss function for an ordered pair p = (i, j) may be set as expressed by Equation 1 below, for example.

Equation 1:

$$L_{loss}\left(\widehat{l_p}, l_p\right) = \max\left(0, -\mathbb{1}\left(\widehat{T_i}, \widehat{T_j}\right) \cdot (l_i - l_j) + \delta\right)$$
$$s.t \quad \mathbb{1}\left(\widehat{T_i}, \widehat{T_j}\right) = \begin{cases} +1, & if \ \widehat{T_i} > \widehat{T_j} \\ -1, & otherwise \end{cases}$$

In Equation 1, $\widehat{T_i}$, may be the absolute value of a difference between a restored image $O_i$ corresponding to an i-th image frame and a ground truth image $G_i$, and $\delta$ may be a predetermined margin. The loss prediction network 420 may be trained to output a result satisfying $l_1 > l_N$ if $T_1 > T_N$. For example, for a target loss function, if $l_1 > l_N$ when $T_1 > T_N$, $L_{loss}$ may be 0, and if $l_1 < l_N$ when $T_1 > T_N$, it means the loss prediction network 420 performed prediction incorrectly, and $L_{loss}$ may have a value of $l_N - l_1$.

The ranking loss used for the training of the loss prediction network 420 is not limited to a specific example, and various types of ranking losses may be applicable.

In addition, the loss prediction network 420 may be trained using the trained image restoration network 410, or the image restoration network 410 and the loss prediction network 420 may be trained simultaneously from the beginning.

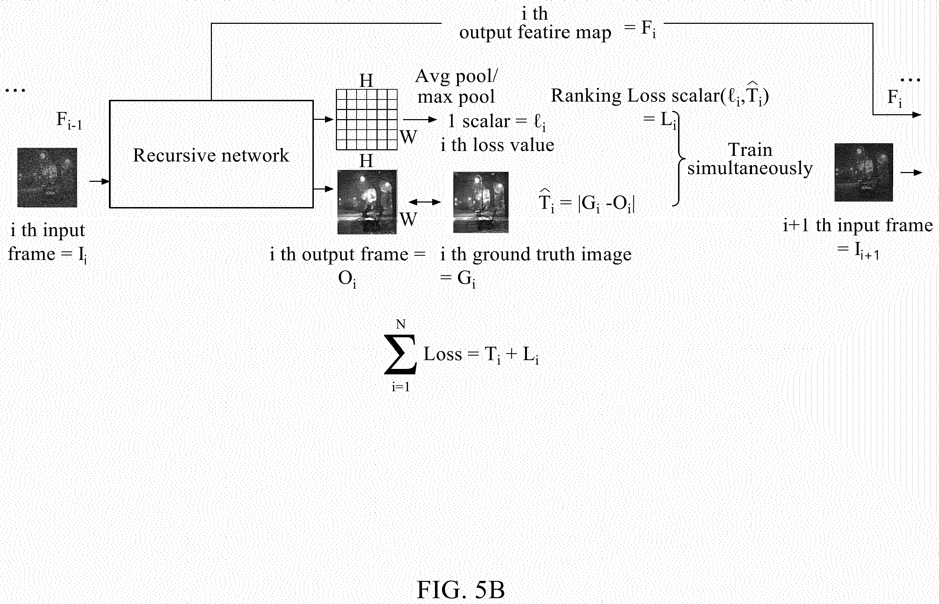

FIG. 5B illustrates an example of training an image restoration network such that the image restoration network outputs a loss value, without separately using a loss prediction network. The description provided with reference to FIGS. 2A to 4C may also apply to the example of FIG. 5B.

When the image restoration network 410 has not been trained at all, the image restoration network 410 may learn two tasks of image restoration and loss prediction simultaneously at once using two types of loss functions shown in Equation 2 below. In doing so, a separate loss prediction network is practically unnecessary and may be naturally included in an existing image restoration network.

The training apparatus 200 may also train the image restoration network 410 such that the image restoration network 410 may output a loss value, without separately using the loss prediction network 420.

The training apparatus 200 may train the image restoration network 410 using a loss function defined by Equation 2 below, for example.

Equation 2:

$$\sum_{i=1}^{N} Loss = T_i + L_i$$

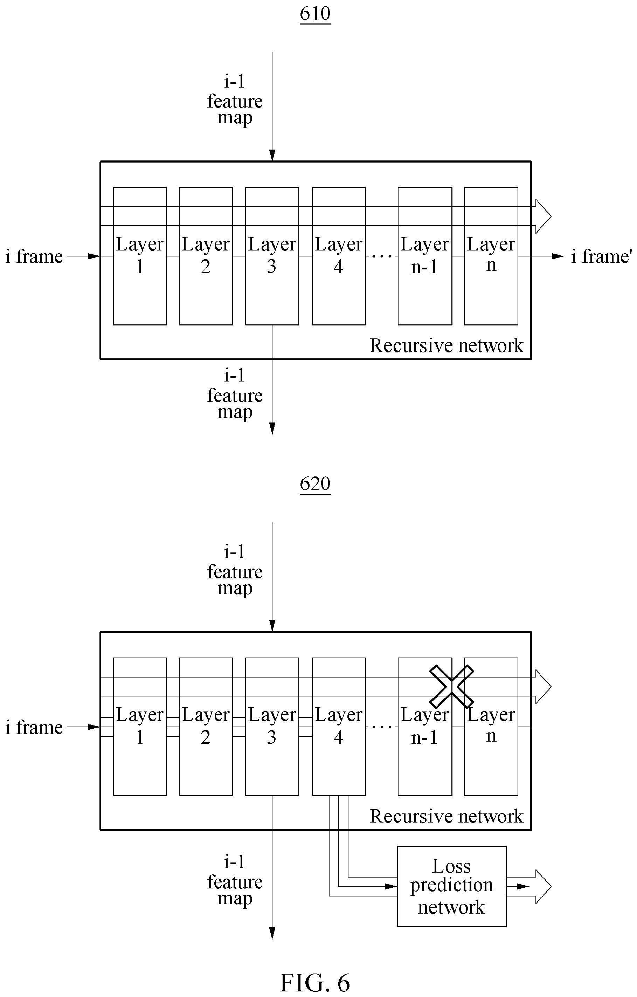

FIG. 6 illustrates an example of an effect of an image restoration system.

Referring to a diagram 610 of FIG. 6, the typical image restoration methods need to first generate corresponding restored images (I frame') with respect to a plurality of image frames (I frame). Therefore, the typical image restoration methods need to perform an operation for all layers of an image restoration network with respect to the image frames (I frame).

On the contrary, referring to a diagram 620, the image restoration apparatus 250 may determine an image frame expected to be restored as the best image among a plurality of image frames using only a loss value, rather than generating restored images.

Accordingly, the image restoration apparatus 250 of one or more embodiments may determine the loss value only with an operation up to some layers (e.g., layer 1 to layer 4) of the image restoration network 410 and thus, may reduce memory usage compared to the typical image restoration methods.

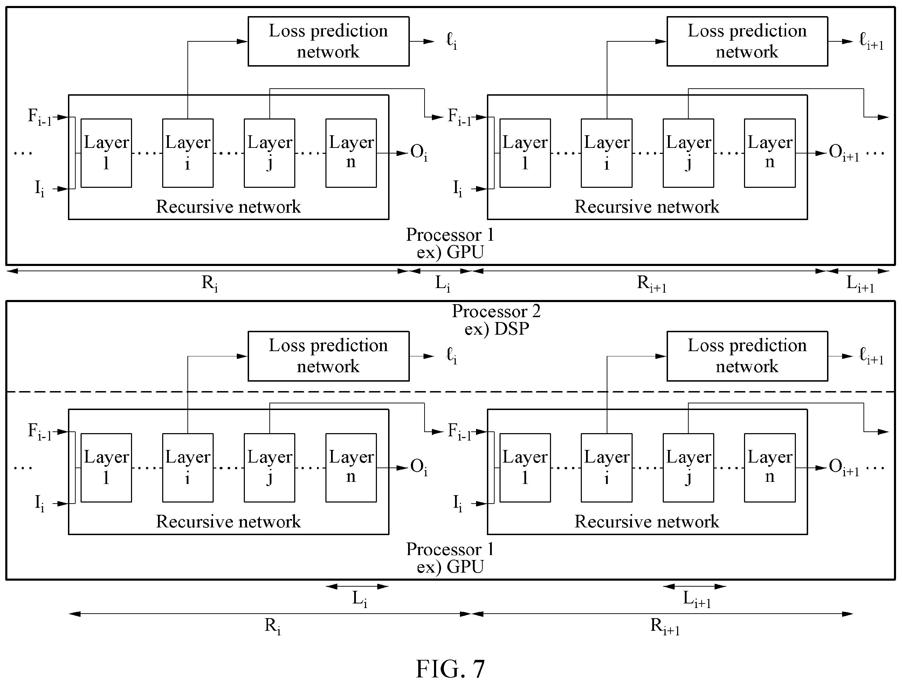

FIG. 7 illustrates an example of driving an image restoration network and a loss prediction network in parallel using a plurality of processors. The description provided with reference to FIGS. 3 to 6 may also apply to the example of FIG. 7.

The image restoration apparatus 250 may include one or more processors. The image restoration apparatus 250 may perform inference operations of the image restoration network 410 and the loss prediction network 420 using one processor, or may drive the image restoration network 410 and the loss prediction network 420 in parallel using a plurality of processors for faster inference.

Referring to FIG. 7, when a first processor (e.g., a graphics processing unit (GPU)) starts an inference operation of the image restoration network 410 with respect to an i-th image frame, a second processor (e.g., a digital signal processor (DSP)) may determine a loss value for an (i-1)-th intermediate feature map using the loss prediction network 420.

In other words, the driving of the loss prediction network 420 may be hidden by using a plurality of processors. For example, the total time required for one processor to perform the inference operations of the image restoration network 410 and the loss prediction network 420 may be $\sum_{i=1}^{N} R_i + L_i$ . $R_i$ may denote the driving time of the image restoration network 410 for the i-th image frame, and $L_i$ may denote the driving time of the loss prediction network 420 for the i-th image frame. On the contrary, the total time required to drive the image restoration network 410 and the loss prediction network 420 in parallel using two processors may be $\sum_{i=1}^{N} R_i$ .

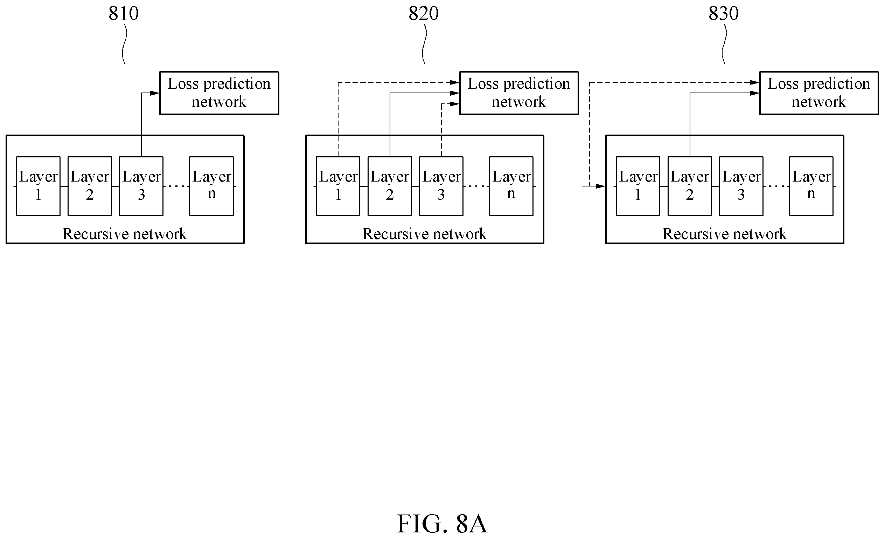

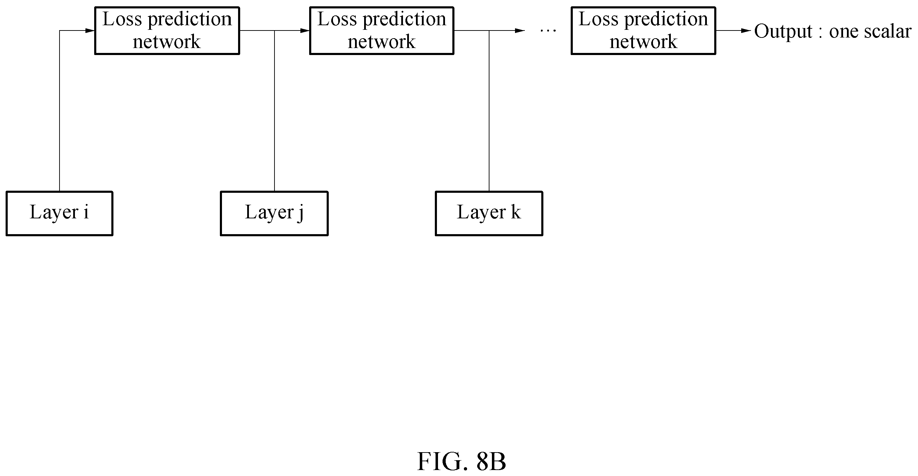

FIGS. 8A and 8B illustrate examples of inputs of a loss prediction network. The description provided with reference to FIGS. 3 to 7 may also apply to the examples of FIGS. 8A and 8B.

Referring to FIG. 8A, not only one intermediate feature map, but also a plurality of intermediate feature maps or image frames may be used as input for the loss prediction network 420.

For example, referring to a diagram 810, an intermediate feature map output from a third layer may be used as input for the loss prediction network 420. Referring to a diagram 820, intermediate feature maps output from first to third layers may be used as input for the loss prediction network 420. Referring to a diagram 830, an image frame and intermediate feature maps output from a second layer may be used as input for the loss prediction network 420. A plurality of intermediate feature maps may be concatenated into one and input into the loss prediction network 420.

Referring to FIG. 8B, the loss prediction network 420 may receive a plurality of intermediate feature maps in series and output one loss value.

For example, an intermediate feature map output from an i-th layer may be input into the loss prediction network 420, and an output at this time and an intermediate feature map output from a j-th layer may be input into the loss prediction network 420 again, and the j-th layer may be a layer connected after the i-th layer. In the same manner, an output of the loss prediction network 420 corresponding to a previous layer and respective intermediate feature maps of current layers may be input into the loss prediction network 420 corresponding to a current layer. An output of the loss prediction network 420 corresponding to a predetermined final layer may be determined to be a loss value.

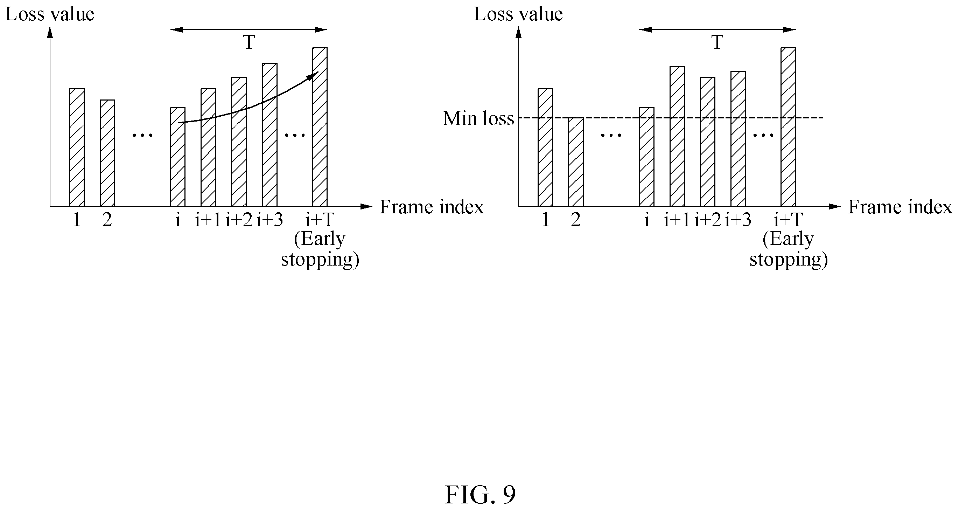

FIG. 9 illustrates examples of early stopping.

According to an example, rather than determining a reference frame after obtaining loss values for all image frames (e.g., N image frames), early stopping that determine a reference frame using loss values for a portion of the image frames is also possible.

Referring to a diagram 910 of FIG. 9, the image restoration apparatus 250 may store a loss value inferred by the loss prediction network 420 with respect to each image frame each time, and perform early stopping by determining an image with good image quality will not be restored anymore when a loss value continuously increases for a predetermined number of (e.g., T) frames.

Alternatively, referring to a diagram 920 of FIG. 9, the image restoration apparatus 250 may perform early stopping by determining an image with good image quality will not be restored anymore when a minimum loss value is not updated for a predetermined number of (e.g., T) frames.

When early stopping is determined, the image restoration apparatus 250 may stop the inference of the loss prediction network 520 and the image restoration network 410.

Early stopping may exert its effect as the number of burst images input into an image restoration network of the existing recursive structure increases. In addition, faster inference may be expected in a mobile environment.

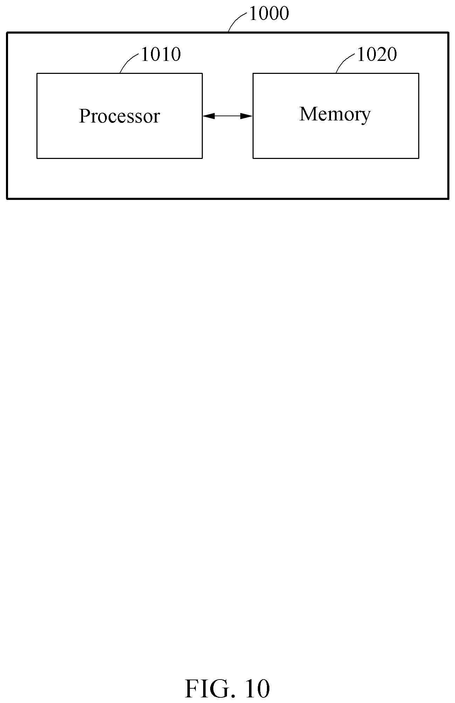

FIG. 10 illustrates an example of a configuration of an image restoration apparatus.

Referring to FIG. 10, an image restoration apparatus 1000 may be an apparatus for determining a reference frame and generating a final image based on the reference frame. The image restoration apparatus 1000 may be referred to as a final image generation apparatus. The image restoration apparatus 1000 may be or include either one or both of the training apparatus 200 and the image restoration apparatus 250.

The image restoration apparatus 1000 may include a processor 1010 (e.g., one or more processors) and a memory 1020 (e.g., one or more memories).

The memory 1020 may store computer-readable instructions. When the instructions stored in the memory 1020 are executed by the processor 1010, the processor 1010 may process operations defined by the instructions. The memory 1020 may include, for example, random-access memory (RAM), dynamic random-access memory (DRAM), static random-access memory (SRAM), and/or other types of non-volatile memory known in the art. The memory 1020 may store a pretrained ANN-based generative model. For example, the memory 1020 may be or include a non-transitory computer-readable storage medium storing instructions that, when executed by the processor 1010, configure the processor 1010 to perform any one, any combination, or all of the operations and methods described herein with reference to FIGS. 1-10.

The at least one processor 1010 may control the overall operation of the image restoration apparatus 1000. The processor 1010 may be a hardware-implemented apparatus having a circuit that is physically structured to execute desired operations. The desired operations may include code or instructions included in a program. The hardware-implemented apparatus may include, but is not limited to, for example, a microprocessor, a central processing unit (CPU), a graphics processing unit (GPU), a processor core, a multi-core processor, a multiprocessor, an application-specific integrated circuit (ASIC), a field-programmable gate array (FPGA), and/or a neural processing unit (NPU).

The processor 1010 may control the image restoration apparatus 1000 by executing functions and instructions in the image restoration apparatus 1000. The processor 1010 may control the image restoration apparatus 1000 to perform the at least one operation and/or function described above with reference to FIGS. 3 to 8B.

Under the control of the processor 1010, the image restoration apparatus 1000 may obtain a plurality of image frames acquired for a scene within a predetermined time, obtain a loss value corresponding to each of the plurality of image frames, determine at least one reference frame among the plurality of image frames based on the loss value, and generate a final image of the scene based on the reference frame.

As described above, the processor 1010 may include a first processor and a second processor that operates in parallel with the first processor. The first processor may obtain at least one intermediate feature map and an output feature map corresponding to a corresponding image frame by inputting an output feature map corresponding to a previous image frame of the corresponding image frame into a first neural network. The second processor may obtain a loss value corresponding to the corresponding image frame by inputting the intermediate feature map corresponding to the corresponding image frame into a second neural network.

The training apparatuses, image restoration apparatuses, processors, memories, training apparatus 200, image restoration apparatus 250, image restoration apparatus 1000, processor 1010, memory 1020, and other apparatuses, devices, units, modules, and components disclosed and described herein with respect to FIGS. 1-10 are implemented by or representative of hardware components. As described above, or in addition to the descriptions above, examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. As described above, or in addition to the descriptions above, example hardware components may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-10 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media, and thus, not a signal per se. As described above, or in addition to the descriptions above, examples of a non-transitory computer-readable storage medium include one or more of any of read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above and all drawing disclosures, the scope of the disclosure is also inclusive of the claims and their equivalents, i.e., all variations within the scope of the claims and their equivalents are to be construed as being included in the disclosure.

**Claims**

1.  A processor-implemented image restoration method, the method comprising:

    obtaining (310) a plurality of image frames acquired for a scene within a predetermined time;
    determining (320) loss values respectively corresponding to the plurality of image frames using a loss prediction network, each of the loss values indicating a difference between an image restored by an image restoration neural network and a ground truth image,
    wherein the determining (320) of the loss values comprises:

    determining an intermediate feature map and an output feature map corresponding to an image frame among the plurality of image frames by inputting the image frame and an output feature map corresponding to a directly preceding image frame among the plurality of image frames into the image restoration network, said intermediate feature map being a feature map output from a predetermined layer among a plurality of layers of the image restoration network,
    determining a loss value corresponding to the image frame by inputting the intermediate feature map into the loss prediction network;

    determining (330) a reference frame among the plurality of image frames based on the loss values; and
    generating (340) a final image of the scene based on the reference frame,
    wherein the generating (340) of the final image comprises generating the final image by inputting the reference frame and an output feature map corresponding to an image frame directly preceding the reference frame into the image restoration network.

2.  The method of claim 1, wherein the determining of the reference frame comprises determining an image frame having a minimum of the loss values among the plurality of image frames to be the reference frame.

3.  The method of any one of the previous claims, wherein the determining of the reference frame comprises comparing the loss value corresponding to the image frame with a reference loss value determined prior to the determining of the loss value corresponding to the image frame.

4.  The method of claim 3, wherein the determining of the reference frame comprises replacing the reference loss value with the loss value corresponding to the image frame, in response to the loss value corresponding to the image frame being less than the reference loss value.

5.  The method of claim 3 or 4, further comprising replacing a reference input feature map corresponding to the reference loss value with the output feature map corresponding to the directly preceding image frame, in response to the loss value corresponding to the image frame being less than the reference loss value.

6.  The method of any one of claims 3-5, wherein the determining of the reference frame comprises maintaining the reference loss value, in response to the loss value corresponding to the image frame being greater than the reference loss value.

7.  The method of any one of the previous claims, wherein the determining of the loss value further comprises:

    generating the output feature map by inputting the image frame among the plurality of image frames and the output feature map corresponding to the directly preceding image frame among the plurality of image frames into the image restoration network; and
    determining the loss value corresponding to the image frame by inputting the image frame into the loss prediction network.

8. The method of any one of the previous claims, wherein the determining of the reference frame comprises either one or both of:

- determining, as a plurality of reference frames, a predetermined number of the plurality of image frames having minimum loss values among the loss values; and
- determining, as the plurality of reference frames, image frames of the plurality of image frames having loss values less than or equal to a threshold among the loss values;

wherein the generating of the final image includes generating a final image for each of the plurality of reference frames.

9. A non-transitory computer-readable storage medium storing instructions that, when executed by one or more processors, configure the one or more processors to perform the method of any one of the previous claims.

10. An image restoration apparatus, the apparatus comprising:
one or more processors configured to:

obtain a plurality of image frames acquired for a scene within a predetermined time;
determine, using a loss prediction network, loss values respectively corresponding to the plurality of image frames, each of the loss values indicating a difference between an image restored by an image restoration neural network and a ground truth image,
wherein the determining of the loss values comprises:

determining an intermediate feature map and an output feature map corresponding to an image frame among the plurality of image frames by inputting the image frame and an output feature map corresponding to a directly preceding image frame among the plurality of image frames into the image restoration network, said intermediate feature map being a feature map output from a predetermined layer among a plurality of layers of the image restoration network,
determining a loss value corresponding to the image frame by inputting the intermediate feature map into the loss prediction network;

determine a reference frame among the plurality of image frames based on the loss values; and
generate a final image of the scene based on the reference frame,
wherein the generating of the final image comprises generating the final image by inputting the reference frame and an output feature map corresponding to an image frame directly preceding the reference frame into the image restoration network.

11. The apparatus of claim 10, wherein, for the determining of the reference frame, the one or more processors are configured to determine an image frame having a minimum of the loss values among the plurality of image frames to be the reference frame.

**Patentansprüche**

1. Prozessorimplementiertes Bildwiederherstellungsverfahren, wobei das Verfahren Folgendes umfasst:

Erhalten (310) einer Vielzahl von Bildframes, die für eine Szene innerhalb einer vorbestimmten Zeit erhalten wurden;
Bestimmen (320) von Verlustwerten, die jeweils der Vielzahl von Bildframes entsprechen, unter Verwendung eines Verlustvorhersagenetzwerks, wobei jeder der Verlustwerte eine Differenz zwischen einem durch ein neuronales Netz zur Bildwiederherstellung wiederhergestellten Bild und einem Grundwahrheitsbild angibt, wobei das Bestimmen (320) der Verlustwerte Folgendes umfasst:

Bestimmen einer Zwischenmerkmalskarte und einer Ausgangsmerkmalskarte, die einem Bildframe unter der Vielzahl von Bildframes entspricht, durch Eingeben des Bildframes und einer Ausgangsmerkmalskarte, die einem unmittelbar vorhergehenden Bildframe unter der Vielzahl von Bildframes entspricht, in das Bildwiederherstellungsnetzwerk, wobei es sich bei der Zwischenmerkmalskarte um eine Merkmalskarte handelt, die von einer vorbestimmten Schicht unter einer Vielzahl von Schichten des Bildwiederherstellungsnetzwerks ausgegeben wird,
Bestimmen eines Verlustwertes, der dem Bildframe entspricht, durch Eingeben der Zwischenmerkmalskarte in das Verlustvorhersagenetzwerk;

Bestimmen (330) eines Referenzframes aus der Vielzahl von Bildframes basierend auf den Verlustwerten; und
Erzeugen (340) eines endgültigen Bildes der Szene basierend auf dem Referenzframe,
wobei das Erzeugen (340) des endgültigen Bildes das Erzeugen des endgültigen Bildes durch Eingeben des Referenzframes und einer Ausgangsmerkmalskarte, die einem dem Referenzframe unmittelbar vorhergehenden Bildframe entspricht, in das Bildwiederherstellungsnetzwerk umfasst.

2. Verfahren nach Anspruch 1, wobei das Bestimmen des Referenzframes das Bestimmen eines Bildframes aus der Vielzahl von Bildframes, der ein Minimum der Verlustwerte aufweist, als Referenzframe umfasst.

3. Verfahren nach einem der vorhergehenden Ansprüche, wobei das Bestimmen des Referenzframes das Vergleichen des dem Bildframe entsprechenden Verlustwertes mit einem Referenzverlustwert umfasst, der vor dem Bestimmen des dem Bildframe entsprechenden Verlustwertes bestimmt wurde.

4. Verfahren nach Anspruch 3, wobei das Bestimmen des Referenzframes das Ersetzen des Referenzverlustwertes durch den dem Bildframe entsprechenden Verlustwert als Reaktion darauf umfasst, dass der dem Bildframe entsprechende Verlustwert kleiner als der Referenzverlustwert ist.

5. Verfahren nach Anspruch 3 oder 4, ferner umfassend das Ersetzen einer Referenzeingangsmerkmalskarte, die dem Referenzverlustwert entspricht, durch die Ausgangsmerkmalskarte, die dem unmittelbar vorhergehenden Bildframe entspricht, als Reaktion darauf, dass der dem Bildframe entsprechende Verlustwert kleiner als der Referenzverlustwert ist.

6. Verfahren nach einem der Ansprüche 3 bis 5, wobei das Bestimmen des Referenzframes das Beibehalten des Referenzverlustwertes als Reaktion darauf umfasst, dass der dem Bildframe entsprechende Verlustwert größer als der Referenzverlustwert ist.

7. Verfahren nach einem der vorhergehenden Ansprüche, wobei das Bestimmen des Verlustwertes ferner Folgendes umfasst:

Erzeugen der Ausgangsmerkmalskarte durch Eingeben des Bildframes aus der Vielzahl von Bildframes und der Ausgangsmerkmalskarte, die dem unmittelbar vorhergehenden Bildframe aus der Vielzahl von Bildframes entspricht, in das Bildwiederherstellungsnetzwerk; und
Bestimmen des Verlustwertes, der dem Bildframe entspricht, durch Eingeben des Bildframes in das Verlustvorhersagenetzwerk.

8. Verfahren nach einem der vorhergehenden Ansprüche, wobei das Bestimmen des Referenzframes entweder eines oder beides der Folgenden umfasst:

- Bestimmen einer vorbestimmten Anzahl von der Vielzahl von Bildframes, die minimale Verlustwerte unter den Verlustwerten aufweisen, als eine Vielzahl von Referenzframes; und
- Bestimmen von Bildframes aus der Vielzahl von Bildframes, die Verlustwerte aufweisen, die kleiner oder gleich einem Schwellenwert unter den Verlustwerten sind, als die Vielzahl von Referenzframes;

wobei das Erzeugen des endgültigen Bildes das Erzeugen eines endgültigen Bildes für jeden aus der Vielzahl von Referenzframes einschließt.

9. Übergangsloses computerlesbares Speichermedium, in dem Anweisungen gespeichert sind, die, wenn sie von einem oder mehreren Prozessoren ausgeführt werden, den einen oder die mehreren Prozessoren konfigurieren, um das Verfahren nach einem der vorhergehenden Ansprüche durchzuführen.

10. Vorrichtung zur Wiederherstellung von Bildern, wobei die Vorrichtung Folgendes umfasst:
einen oder mehrere Prozessoren, der/die zu Folgendem konfiguriert ist/sind:

Erhalten einer Vielzahl von Bildframes, die für eine Szene innerhalb einer vorbestimmten Zeit erhalten wurden;
Bestimmen von Verlustwerten, die jeweils der Vielzahl von Bildframes entsprechen, unter Verwendung eines Verlustvorhersagenetzwerks, wobei jeder der Verlustwerte eine Differenz zwischen einem durch ein neuronales Netz zur Bildwiederherstellung wiederhergestellten Bild und einem Grundwahrheitsbild angibt, wobei das Bestimmen der Verlustwerte Folgendes umfasst:

Bestimmen einer Zwischenmerkmalskarte und einer Ausgangsmerkmalskarte, die einem Bildframe aus der Vielzahl von Bildframes entspricht, durch Eingeben des Bildframes und einer Ausgangsmerkmalskarte, die einem unmittelbar vorhergehenden Bildframe aus der Vielzahl von Bildframes entspricht, in das Bildwiederherstellungsnetzwerk, wobei es sich bei der Zwischenmerkmalskarte um eine Merkmalskarte handelt, die von einer vorbestimmten Schicht unter einer Vielzahl von Schichten des Bildwiederherstellungsnetzwerks ausgegeben wird,
Bestimmen eines Verlustwertes, der dem Bildframe entspricht, durch Eingeben der Zwischenmerkmalskarte in das Verlustvorhersagenetzwerk;

Bestimmen eines Referenzframes aus der Vielzahl von Bildframes basierend auf den Verlustwerten; und
Erzeugen eines endgültigen Bildes der Szene basierend auf dem Referenzframe,
wobei das Erzeugen des endgültigen Bildes das Erzeugen des endgültigen Bildes durch Eingeben des Referenzframes und einer Ausgangsmerkmalskarte, die einem dem Referenzframe unmittelbar vorhergehenden Bildframe entspricht, in das Bildwiederherstellungsnetzwerk umfasst.

**11.** Vorrichtung nach Anspruch 10, wobei für das Bestimmen des Referenzframes der eine oder die mehreren Prozessoren konfiguriert ist/sind, um einen Bildframe, der ein Minimum der Verlustwerte aus der Vielzahl von Bildframes aufweist, als Referenzframe zu bestimmen.

## Revendications

**1.** Procédé de restauration d'image mis en œuvre par processeur, le procédé comprenant les étapes consistant à :

obtenir (310) une pluralité de trames d'image acquises relativement à une scène pendant un temps prédéterminé ;
déterminer (320) des valeurs de perte correspondant respectivement à la pluralité de trames d'image à l'aide d'un réseau de prédiction de perte, chacune des valeurs de perte indiquant une différence entre une image restaurée par un réseau neuronal de restauration d'image et une image de vérité terrain,
ladite détermination (320) des valeurs de perte comprenant :

la détermination d'une carte de caractéristiques intermédiaire et d'une carte de caractéristiques de sortie correspondant à une trame d'image parmi la pluralité de trames d'image par introduction, dans le réseau de restauration d'image, de la trame d'image et d'une carte de caractéristiques de sortie correspondant à une trame d'image immédiatement précédente parmi la pluralité de trames d'image, ladite carte de caractéristiques intermédiaire étant une carte de caractéristiques produite par une couche prédéterminée parmi une pluralité de couches du réseau de restauration d'image,
la détermination d'une valeur de perte correspondant à la trame d'image par introduction de la carte de caractéristiques intermédiaire dans le réseau de prédiction de perte ;

déterminer (330) une trame de référence parmi la pluralité de trames d'image compte tenu des valeurs de perte ; et
générer (340) une image finale de la scène compte tenu de la trame de référence,
ladite génération (340) de l'image finale comprenant la génération de l'image finale par introduction, dans le réseau de restauration d'image, de la trame de référence et d'une carte de caractéristiques de sortie correspondant à une trame d'image immédiatement précédente à ladite trame de référence.

**2.** Procédé selon la revendication 1, dans lequel la détermination de la trame de référence comprend la détermination, comme trame de référence, d'une trame d'image ayant une valeur de perte minimale parmi la pluralité de trames d'image.

**3.** Procédé selon l'une quelconque des revendications précédentes, dans lequel la détermination de la trame de référence comprend la comparaison de la valeur de perte correspondant à la trame d'image avec une valeur de perte de référence déterminée avant la détermination de la valeur de perte correspondant à la trame d'image.

4. Procédé selon la revendication 3, dans lequel la détermination de la trame de référence comprend le remplacement de la valeur de perte de référence par la valeur de perte correspondant à la trame d'image, en réaction au fait que la valeur de perte correspondant à la trame d'image est inférieure à la valeur de perte de référence.

5. Procédé selon la revendication 3 ou 4, comprenant en outre le remplacement d'une carte de caractéristiques d'entrée de référence correspondant à la valeur de perte de référence par la carte de caractéristiques de sortie correspondant à la trame d'image immédiatement précédente, en réaction au fait que la valeur de perte correspondant à la trame d'image est inférieure à la valeur de perte de référence.

6. Procédé selon l'une quelconque des revendications 3 à 5, dans lequel la détermination de la trame de référence comprend le maintien de la valeur de perte de référence, en réaction au fait que la valeur de perte correspondant à la trame d'image est supérieure à la valeur de perte de référence.

7. Procédé selon l'une quelconque des revendications précédentes, dans lequel la détermination de la valeur de la perte comprend en outre :

la génération de la carte de caractéristiques de sortie par introduction, dans le réseau de restauration d'image, de la trame d'image parmi la pluralité de trames d'image et de la carte de caractéristiques de sortie correspondant à la trame d'image immédiatement précédente parmi la pluralité de trames d'image, et la détermination de la valeur de perte correspondant à la trame d'image par introduction de ladite trame d'image dans le réseau de prédiction de perte.

8. Procédé selon l'une quelconque des revendications précédentes, dans lequel la détermination de la trame de référence comprend l'une ou l'autre des déterminations suivantes :

- la détermination, comme pluralité de trames de référence, d'un nombre prédéterminé de trames d'image de la pluralité de trames d'image qui présentent des valeurs de perte minimales parmi les valeurs de perte, et
- la détermination, comme pluralité de trames de référence, des trames d'image de la pluralité de trames d'image qui présentent des valeurs de perte inférieures ou égales à un seuil parmi les valeurs de perte ;

ladite génération de l'image finale comprenant la génération d'une image finale pour chaque trame de référence de la pluralité de trames de référence.

9. Support de stockage non transitoire lisible par ordinateur sur lequel sont stockées des instructions qui, lorsqu'elles sont exécutées par un ou plusieurs processeurs, configurent le ou les processeurs de façon qu'ils réalisent le procédé selon l'une quelconque des revendications précédentes.

10. Appareil de restauration d'image, ledit appareil comprenant :
un ou plusieurs processeurs configurés pour :

obtenir une pluralité de trames d'image acquises relativement à une scène pendant un temps prédéterminé ; déterminer, à l'aide d'un réseau de prédiction de perte, des valeurs de perte correspondant respectivement à la pluralité de trames d'images, chacune des valeurs de perte indiquant une différence entre une image restaurée par un réseau neuronal de restauration d'image et une image de vérité terrain, ladite détermination des valeurs de perte comprenant :

la détermination d'une carte de caractéristiques intermédiaire et d'une carte de caractéristiques de sortie correspondant à une trame d'image parmi la pluralité de trames d'image par introduction, dans le réseau de restauration d'image, de la trame d'image et d'une carte de caractéristiques de sortie correspondant à une trame d'image immédiatement précédente parmi la pluralité de trames d'image, ladite carte de caractéristiques intermédiaire étant une carte de caractéristiques produite par une couche prédéterminée parmi une pluralité de couches du réseau de restauration d'image, la détermination d'une valeur de perte correspondant à la trame d'image par introduction de la carte de caractéristiques intermédiaire dans le réseau de prédiction de perte ;

déterminer une trame de référence parmi la pluralité de trames d'image compte tenu des valeurs de perte ; et

générer une image finale de la scène compte tenu de la trame de référence,

ladite génération de l'image finale comprenant la génération de l'image finale par introduction, dans le réseau de restauration d'image, de la trame de référence et d'une carte de caractéristiques de sortie correspondant à une trame d'image immédiatement précédente à la trame de référence.

11. Appareil selon la revendication 10, dans lequel, pour la détermination de la trame de référence, le ou les processeurs sont configurés pour déterminer, comme trame de référence, une trame d'image ayant une valeur de perte minimale parmi la pluralité de trames d'image.

Model A

Predicted image
base on corresponding all input frame

Model A'

Predicted image
base on i th input frame

FIG. 1A

FIG. 1B

FIG. 2A

FIG. 2B

Start

Obtain plurality of image frames acquired for scene within predetermined time — 310

Determine loss value corresponding to each of plurality of image frames — 320

Determine at least one reference frame among plurality of image frames based on loss value — 330

Generate final image of scene based on reference frame — 340

End

FIG. 3

FIG. 4A

FIG. 4B

---

Algorithm The procedure for best anchor selection

---

Require: i th Input frame $I_i$, $F_{i-1}$ that recursive network output at i-1 frame, feature R_i in the recursive network intermediate output at i frame, Loss Prediction Network L_p

Initial: Min loss $\ell_{min} = \infty$, corresponding input f_i = $\emptyset$, corresponding feature f_m = $\emptyset$

1: for i = 1, 2, ..., N do
2: Inference the R_i using network L_p
   if $\ell_{min}$ > L_p(R_i) then
      $\ell_{min} \leftarrow$ L_p(R_i); f_i $\leftarrow$ I; f_m $\leftarrow F_{i-1}$
   end
3: end for
4: Return Min index f_i and f_m
5: Inference recursive network again with input frame $I_{f\_i}$ and f_m

---

FIG. 4C

**i th intermediate feature map** → **Loss prediction module** → **i th loss value** $= \ell_i$

$L = $ Ranking loss

**i-1 th output feature map** $= F_{i-1}$

**i th output feature map** $= F_i$

i th ground truth loss$_i$

$\widehat{T}_i = |G_i - O_i|$

Layer 1 .... Layer i .... Layer j .... Layer n

Recursive network

i th input frame $= I_i$

i th output frame $= O_i$

i th ground truth image $= G_i$

FIG. 5A

FIG. 5B

EP 4 322 103 B1

610

i-1
feature
map

i frame → | Layer 1 | Layer 2 | Layer 3 | Layer 4 | ... | Layer n-1 | Layer n | → i frame'

Recursive network

i-1
feature
map

620

i-1
feature
map

i frame → | Layer 1 | Layer 2 | Layer 3 | Layer 4 | ... | Layer n-1 | Layer n |

Recursive network

i-1
feature
map

Loss
prediction
network

FIG. 6

FIG. 7

FIG. 8A

| Loss prediction network | → | Loss prediction network | → | ... | Loss prediction network | → Output : one scalar |

```
Layer i          Layer j          Layer k
```

FIG. 8B

FIG. 9

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4040378 A1

**Non-patent literature cited in the description**

- **JIAN REN et al.** *Best Frame Selection in a Short Video*, March 2020